Europäisches Patentamt

European Patent Office

Office européen des brevets

(19)

(11) Numéro de publication: **0 183 615 B1**

(12) **FASCICULE DE BREVET EUROPEEN**

(45) Date de publication du fascicule du brevet: **22.11.90**

(51) Int. Cl.⁵: **G 01 N 25/08, G 01 N 27/18**

(21) Numéro de dépôt: **85402280.3**

(22) Date de dépôt: **22.11.85**

(54) Procédé et dispositif de détection de changement de phase.

(30) Priorité: **23.11.84 FR 8417907**

(43) Date de publication de la demande:
**04.06.86 Bulletin 86/23**

(45) Mention de la délivrance du brevet:
**22.11.90 Bulletin 90/47**

(84) Etats contractants désignés:
**BE CH DE GB IT LI NL**

(56) Documents cités:
**EP-A-0 056 424**
**WO-A-84/02003**
**DE-A-2 618 349**
**FR-A-2 193 487**
**FR-A-2 470 381**
**GB-A-2 139 763**

**PATENT ABSTRACTS OF JAPAN, vol. 7, no. 78
(P-188)(1223) 31 mars 1983; & JP-A-58 9058
(DENKI KAGAGU KEIKI K.K.) 19-01-1983**

(73) Titulaire: **ELECTRICITE DE FRANCE Service
National
2, rue Louis Murat
F-75008 Paris (FR)**

(72) Inventeur: **Turon-Lagot, Gilbert
4, Boulevard du Général de Gaulle
F-92500 Rueil Malmaison (FR)**

(74) Mandataire: **Fort, Jacques et al
CABINET PLASSERAUD 84, rue d'Amsterdam
F-75009 Paris (FR)**

Courier Press, Leamington Spa, England.

## Description

L'invention a pour objet un procédé et un dispositif de détection de l'apparition ou de l'imminence d'un changement d'état ou de phase au sein d'un fluide, suivant lequel on applique par effet Joule une quantité de chaleur déterminée à un élément conducteur de la chaleur en contact avec le fluide, on mesure la température dudit élément et on l'utilise pour déterminer l'apparition d'une seconde phase dans le fluide.

Un procédé de ce type est connu par le document EP—A—00 56 424. Selon ce procédé, on apporte par effet Joule une quantité de chaleur déterminée par unité de temps à un élement conducteur de la chaleur en contact avec le fluide et l'on mesure la température dudit élément. On détecte l'apparition d'un changement d'état (de liquide à vapeur) pour déterminer la température d'ébullition d'un liquide de frein en calculant la dérivée, par rapport au temps, de la température qui est prise en considération. Un changement d'évolution temporelle de la température indique un changement de phase, c'est-à-dire le développement des bulles de vapeur. En mesurant la température correspondante, on peut déterminer la température d'ébullition.

L'invention trouve un intétrêt dans les domaines où il faut éviter l'apparition de conditions de température et de pression provoquant une ébullition locale, par exemple dans les réacteurs à eau sous pression, dits PWR, dans lesquels une ébullition locale se traduit par un risque de destruction des éléments de combustible nucléaire du fait du changement des conditions de refroidissement. Il est souhaitable d'y surveiller les conditions qui existent en des points de la cuve que l'on peut considérer comme critiques et de détecter, non seulement l'apparition de bulles, mais souvent aussi la marge de sécurité qui subsiste avant ébullition et en particulier une grandeur représentative de l'écart entre la température effective de l'eau et celle pour laquelle s'amorce une ébullition.

L'invention vise à fournir un procédé et un dispositif de détection simples, permettant non seulement de déceler un changement se traduisant par l'apparition d'une deuxième phase au sein d'un fluide normalement homogène, mais aussi de déterminer la marge de sécurité qui subsiste et de mesurer la température sans adjonction de moyens supplémentaires appréciables.

Ce but est atteint par le procédé selon l'invention par le fait qu'on mesure en alternance la température de l'élément conducteur sans apport préalable de la quantité de chaleur déterminée et la température de l'élément conducteur après apport de ladite quantité de chaleur, et on compare les deux résultats pour détecter l'apparition d'une seconde phase dans le fluide.

La détection est basée sur le fait que la conductance thermique du fluide, initialement en phase liquide homogène, est fortement diminuée par l'apparition de bulles de vapeur ou de gaz. Lorsqu'on souhaite déterminer l'imminence de l'apparition de la phase vapeur, l'ébullition locale est provoquée par élévation de température due à la chaleur dissipée par effet Joule. Dans tous les cas, il y a diminution de conductance thermique qui à son tour accroît brutalement l'augmentation de température, rendant la mesure fiable.

Le procédé selon l'invention est notamment efficace du fait qu'on mesure les deux températures en alternance, de sorte que la température de référence est toujours actualisée et que la comparaison entre les deux résultats est très exacte. De ce fait, les erreurs de mesure peuvent être évitées.

La quantité de chaleur apportée peut être dissipée dans un élément chauffant (résistance électrique) placé à l'intérieur d'une sonde métallique, contre la paroi inférieure de cette dernière en contact avec le fluide. Le mesure peut être effectuée soit à l'aide d'un capteur séparé (capteur à résistance, thermistance, thermocouple par exemple), soit par mesure de la résistance de l'élément chauffant lui-même, lorsque cette résistance varie de façon notable et bien déterminée avec la température: lorsque cette solution est adoptée, on peut alimenter l'élément par un courant constant, qui peut être faible et cependant provoquer une élévation de température appréciable, très différente suivant qu'il y a ou non présence de bulles de gaz ou de vapeur dans le fluide normalement en phase liquide homogène.

L'invention propose également un dispositif de détection de l'apparition d'un changement d'état ou de phase au sein d'un fluide, comportant une sonde insérable dans le fluide et présentant un fond conducteur de la chaleur et dont la face interne est en contact avec une résistance électrique, reliée à des moyens permettant d'y faire passer un courant prédéterminé de chauffage et avec des moyens de mesure de la température de la paroi, caractérisé en ce qu'il comporte des moyens de comparaison entre la température mesurée et une température de référence et des moyens permettant d'établir et d'interrompre le courant de chauffage en alternance.

La paroi peut être concave de façon à piéger des bulles de gaz ou de vapeur. Les moyens de mesure peuvent incorporer la résistance chauffante ou comporter un capteur distinct. Le dispositif comportera dans tous les cas un boîtier électrique ou électronique qui peut être éloigné de la sonde et relié à la résistance et au capteur par des fils isolés. Ce boîtier pourra avoir diverses constitutions. Il sera très simple lorsque la température d'ébullition du fluide est bien déterminée. Il devra être prévu pour modifier un seuil de température dans d'autres cas, en particulier lorsque la température d'ébullition varie notablement du fait de variations de la pression.

Le dispositif peut être utilisé pour effectuer en alternance plusieurs mesures différentes, par exemple par répétition d'un cycle déterminé, tel que mesure de la température (la résistance électrique n'étant pas alimentée), détection de l'apparition d'une seconde phase ou détection de l'approche des conditions d'apparition de la seconde phase.

L'invention sera mieux comprise à la lecture de la description qui suit d'un mode particulier de réalisation, donné à titre d'exemple non limitatif. La description se réfère aux dessins qui l'accompagnent, dans lesquels:

—la figure 1 est un schéma de principe d'un dispositif constituant un mode particulier de réalisation de l'invention;

—la figure 2 montre une constitution possible de la partie terminale de la sonde de la Figure 1, en coupe suivant la ligne II—II de la Figure 3;

—la figure 3 est une vue en coupe suivant la ligne III—III de la Figure 2.

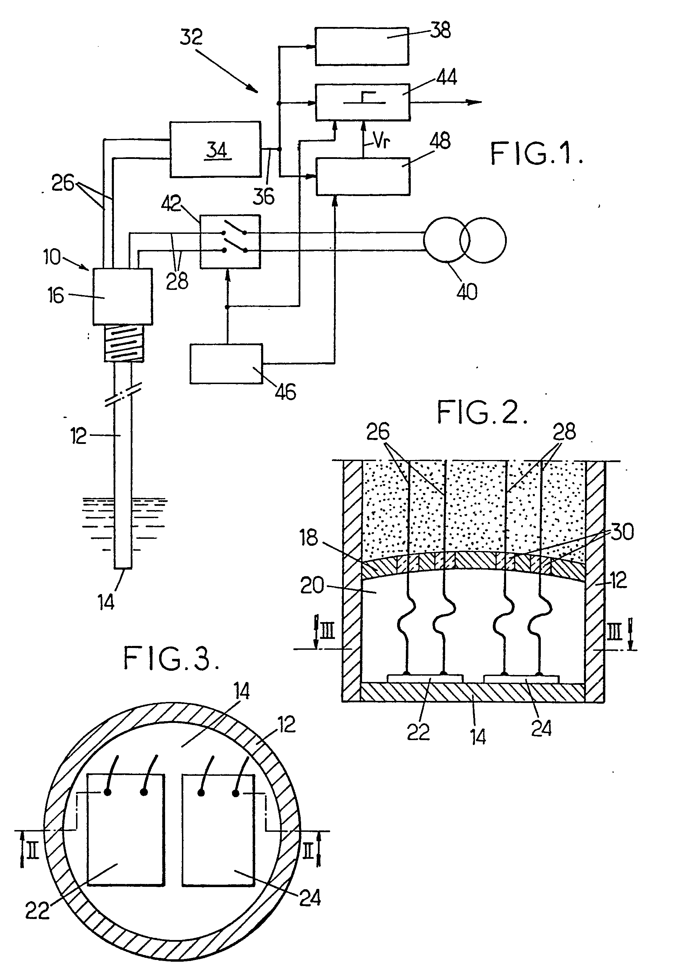

Le dispositif montré sur les figures 1 et 2 comporte une sonde 10 destinée à être plongée dans un liquide afin de déceler l'apparition effective ou imminente de vapeur dans la zone où baigne la partie basse de la sonde. Cette dernière comporte un corps tubulaire 12 fermé par un fond 14 et relié à un connecteur étanche de sortie 16. Une cloison 18 délimite avec le fond 14 une chambre 20. La paroi du corps 12 située au dessus de la cloison 18 contient un isolant thermique et électrique compatible avec la température de fonctionnement, généralement minéral.

Sur le fond 14 sont fixés, l'une à côté de l'autre, un capteur de température 22 et une résistance chauffante 24 qui peuvent souvent avoir la même constitution. Dans le cas représenté, ils sont constitués par une résistance électrique en forme de ruban, par exemple en platine dans le cas d'application à la détection d'ébullition dans un PWR. A chaque ruban sont reliés deux ou trois conducteurs électroniques 26 ou 28 qui traversent la cloison 18 par des joints étanches isolants 30 et sont raccordables par le connecteur 16 à un ensemble électronique 32.

Dans le cas du mode particulier de réalisation montré en figure 1, le boîtier 32 est prévu pour permettre de déterminer la température du fluide dans lequel est immergée la sonde 10. Pour cela les conducteurs 26 sont reliés à un circuit de mesure de température 34 fournissant, sur sa sortie 36, un signal électrique d'amplitude représentative de la température du capteur 22. Le capteur 22 peut être du type à résistance variable en fonction de la température, auquel cas le circuit 34 sera généralement un pont de Wheatstone. Il peut également s'agir d'un couple thermoélectrique, le circuit 34 fournissant alors une valeur amplifiée de la tension du couple.

Lorsque l'élément chauffant 24 n'est pas alimenté, le signal de sortie fourni par le circuit 34 est représentatif de la température de la paroi 14 et donc du fluide: il pourra être affichée ou enregistré sur un organe de sortie 38.

La boîtier 32 comporte également des moyens pour appliquer un courant de chauffage de valeur déterminée à l'élément chauffant 24. Sur la figure 1, l'élément chauffant 24 est alimenté par un générateur de courant constant 40 à travers un interrupteur 42 permettant de mesurer la température du fluide (lorsque l'interrupteur est ouvert) et de déceler l'apparition d'un changement de phase (lorsque l'interrupteur 42 est fermé).

Dans le second cas, le signal de sortie du circuit de mesure 34 est appliqué à un circuit à seuil 44 qui fournit une indication d'alarme sur sa sortie lorsque la tension de mesure est supérieure à une tension de référence Vr choisie de façon appropriée, ou lorsqu'elle dépasse la tension de référence d'un écart déterminé.

La tension Vr pourra être ajustable de façon manuelle et règlée pour correspondre à une température juste inférieure au point d'ébullition du liquide dans lequel baigne la sonde, lorsque ce point d'ébullition est bien déterminé, c'est-à-dire lorsque toutes les conditions influant sur lui sont constantes. La détection s'effectue alors de façon très fiable, car tout début d'ébullition provoquant l'apparition de bulles va modifier considérablement la température du capteur 22, qui passera, d'une température proche de celle du fluide, à une température très supérieure du fait de la diminution de la conductance thermique.

Lorsqu'au contraire le point d'ébullition peut varier dans de larges limites, par exemple à la suite d'un changement de la pression dans le liquide, il peut être préférable de munir le boîtier 32 de moyens d'ajustage automatique de la valeur de référence Vr. Dans la cas montré sur la figure 1, ces moyens comportent un cadenceur 46 qui ouvre et ferme alternativement l'interrupteur 42 et valide en alternance le comparateur 44 d'une part, un générateur 48 de tension de référence Vr d'autre part.

Lorsqu'il est validé, le circuit 48 fournit une tension Vr, appliquée au comparateur 44, représentative de la température réelle du fluide, déterminée par le circuit 35 lorsque l'interrupteur 42 est ouvert.

La séquence de fonctionnement sera alors la suivante.

Au cours d'une première phase, le cadenceur 46 ouvre l'interrupteur 42 et active le générateur de valeur de référence 48. Ce dernier génère et mémorise une tension Vr représentative de la température de l'élément 22 à la fin de la première phase.

Le séquenceur 46, dans une seconde phase, ferme l'interrupteur 42 et active le comparateur 44. Lorsque l'écart entre le signal fourni par le circuit 34 et la tension Vr dépasse une valeur déterminée (qui peut être constante ou ajustable) le circuit fournit une alarme.

Lorsqu'on veut déterminer non plus la présence, mais l'imminence de la formation de vapeur, on choisit une valeur du courant de chauffage accrue, provoquant une ébullition locale lorsque la différence entre température reélle et point d'ébullition devient inférieure à une valeur présélectionnable.

Dans une variant de rélisation de l'invention, un seul et même élément constitue l'élément chauffant 24 et le capteur 22. Cet élément unique peut notamment être une résistance métallique plate. Dans ce cas le séquenceur 46 peut être prévu pour appliquer d'abord une impulsion de chauffage, puis déterminer la température de l'élément à l'issue de cette impulsion. Une autre solution consiste à alimenter en permanence l'élément unique par un courant constant, provoquant un échauffement appréciable, et de déterminer la température de l'élément qui sera beaucoup plus élevée en présence de bulles de vapeur ou de gaz que dans un liquide homogène.

On peut utiliser pour constituer le capteur 22, des éléments de nature très diverses, lorsque ce capteur est distinct de l'élément chauffant 24. Il peut en particulier être constitué par une résistance métallique, une thermistance, un couple thermoélectrique utilisé de façon classique ou fonctionnant en élément Peltier, traversé alors par un courant électrique.

## Revendications

1. Procédé de détection de l'apparition d'un changement d'état ou de phase au sein d'un fluide suivant lequel on applique par effet Joule une quantité de chaleur déterminée à un élément conducteur (14) de la chaleur en contact avec le fluide, on mesure la température dudit élément (14) et on l'utilise pour déterminer l'apparition d'un seconde phase dans le fluide, caractérisé en ce qu'on mesure en alternance la température de l'élément conducteur (14) dans apport préalable de la quantité de chaleur et la température de l'élément conducteur (14) après apport de ladite quantité de chaleur déterminée, et on compare les deux résultats pour détecter l'apparition d'une seconde phase dans le fluide.

2. Procédé selon la revendication 1, caractérisé en ce que, pour déterminer l'imminence de l'apparition de bulles de vapeur, on applique une quantité de chaleur suffisante pour provoquer une ébullition locale du liquide lorsque a température de ce dernier est proche de la température d'ébullition.

3. Procédé selon la revendication 1 ou 2, caractérisé en ce qu'on apporte la quantité de chaleur par passage d'un courant électrique déterminé dans une résistance électrique (24) placée contre ledit élément conducteur de la chaleur (14), a résistance électrique (24) étant séparée du fluide par ledit élément (14).

4. Procédé selon la revendication 3, caractérisé en ce qu'on mesure la température de l'élément (14) à l'aide d'un capteur séparé (22) tel qu'un capteur à résistance, une thermistance ou un thermocouple.

5. Procédé selon la revendication 3, caractérisé en ce qu'on mesure la valeur de la résistance électrique (24) elle-même, alimentée par un courant constant.

6. Procédé selon la revendication 4, caractérisé en ce qu'on mesure en alternance la température du liquide à l'aide du capteur alors que la résistance (24) n'est pas alimentée, puis la température de l'élément conducteur (14) chauffé par la résistance électrique (24) et en ce qu'on compare les deux résultats.

7. Dispositif de détection de l'apparition d'un changement d'état ou de phase au sein d'un fluide, comportant une sonde (10) insérable dans le fluide et présentant un fond (14) conducteur de la chaleur et dont la face interne est en contact avec une résistance électrique (24), reliée à des moyens permettant d'y faire passer un courant prédétermné de chauffage et avec des moyens de mesure de la température de la paroi, caractérisé en ce qu'il comporte des moyens (32) de comparaison entre la température mesurée et une température de référence et des moyens (42) permettant d'etablir et d'interrompre le courant de chauffage en alternance.

8. Dispositif selon la revendication 7, caractérisé en ce que ladite paroi est concave de façon à piéger les bulles de gaz ou de vapeur.

## Patentansprüche

1. Verfahren zum Erkennen des Auftretens einer Zustands- oder Phasenänderung innerhalb eines Fluids, gemäß welchem eine vorbestimmte Wärmemenge mittels Joule'schem Effekt auf ein in Kontakt mit dem Fluid stehendes wärmeleitfähiges Element (14) aufgebracht wird, die Temperatur dieses Elementes (14) gemessen und zum Erkennen des Auftretens einer zweiten Phase in dem Fluid verwendet wird, dadurch gekennzeichnet, daß abwechselnd die Temperatur des leitfähigen Elementes (14) ohne vorheriges Aufbringen der Wärmemenge und die Temperatur des wärmeleitfähigen Elementes (14) nach dem Aufbringen der vorbestimmten Wärmemenge gemessen wird und die zwei Meßergebnisse zum Erkennen des Auftretens einer zweiten Phase in dem Fluid verglichen werden.

2. Verfahren nach Anspruch 1, dadurch gekennzeichnet, daß zum Erkennen des unmittelbaren Bevorstehens des Auftretens von Dampfblasen eine ausreichende Wärmemenge aufgebracht wird, um ein örtliches Sieden der Flüssigkeit hervorzurufen, wenn deren Temperatur nahe der Siedetemperatur ist.

3. Verfahren nach Anspruch 1 oder 2, dadurch gekennzeichnet, daß die Wärmemenge mittels Durchleiten eines vorbestimmten elektrischen Stromes durch einen an dem wärmeleitfähigen Element (14) angeordneten elektrischen Widerstand (24) aufgebracht wird, wobei der elektrische Widerstand (24) durch dieses Element (14) von dem Fluid getrennt ist.

4. Verfahren nach Anspruch 3, dadurch gekennzeichnet, daß die Temperatur des Elementes (14) mit Hilfe eines getrennten Meßfühlers (22), wie z.B. eines Widerstandsfühlers, eine Thermistors oder eines Thermoelementes, gemessen wird.

5. Verfahren nach Anspruch 3, dadurch gekennzeichnet, daß der Wert des elektrischen Widerstandes (24) selbst gemessen wird, wobei dieser durch einen konstanten Strom gespeist wird.

6. Verfahren nach Anspruch 4, dadurch gekennzeichnet, daß abwechselnd die Temperatur der Flüssigkeit mit Hilfe des Meßfühlers, wenn der Widerstand (24) nicht gespeist wird, und dann die Temperatur des von dem eleketrischen Widerstand (24) erwärmten wärmeleitfähigen Elementes (14) gemessen wird und daß diese zwei Meßergebnisse verglichen werden.

7. Vorrichtung zum Erkennen des Auftretens einer Zustands- oder Phasenveränderung in einem Fluid, mit einer in das Fluid einführbaren Sonde (10), die einen wärmeleitfähigen Boden (14) aufweist und deren Innenwand mit einem elektrischen Widerstand (24) in Berührung steht, der an Mittel angeschlossen ist, die das Durchleiten eines vorbestimmten Heizstromes durch diesen gestatten und mit Mitteln zum Messer der Temperatur der Wand, dadurch gekennzeichnet, daß Mittel (32) zum Vergleichen der gemessenen Temperatur mit einer Bezugstemperatur und Mittel (42) vorgesehen sind, die abwechselnd ein Einschalten und Unterbrechen des Heizstromes gestatten.

8. Vorrichtung nach Anspruch 7, dadurch gekennzeichnet, daß die Wand konkav ist, um die Gas- oder Dampfblasen aufzufangen.

**Claims**

1. A method for detecting a change of condition or phase within a fluid, according to which a predetermined heat amount is applied by Joule effect to a heat conducting element (14) in contact with the fluid, the temperature of said element (14) is measured and is used for determining the apparition of a second phase within the fluid, characterized in that, alternately, the temperature of the conducting element (14) without previous delivery of said heat amount and the temperature of the conducting element (14) is measured after delivery of said predetermined heat amount and the two results are compared for detecting apparition of a second phase within the fluid.

2. Method according to claim 1, characterized in that, for determining imminent apparition of gas bubbles, a sufficient heat amount for causing local boiling of the liquid is applied when the temperature of the liquid is close to the boiling temperature.

3. Method according to claim 1 or 2, characterized in that the amount of heat is generated by passing a predetermined electric current across an electrical resistor (24) placed against said heat conducting element (14), the electrical resistor (24) being separated from the fluid by said element (14).

4. Method according to claim 3, characterized in that the temperature of the element (14) is measured with a separate sensor (22) such as a resistance sensor, a thermistor or a thermocouple.

5. Method according to claim 3, characterized in that the value of the electrical resistor, fed with a constant current, is measured.

6. Method according to claim 4, characterized in that, alternatively, the temperature of the liquid is measured with the sensor while the resistor (24) is not fed, then the temperature of the conducting element (14) while it is heated by the electrical resistor is measured and the two results are compared.

7. Device for detecting apparition of a change of condition or phase within a fluid, comprising a probe (10) which is insertable into the fluid and having a heat conducting bottom wall (14) and whose internal surface is in contact with an electrical resistor (24), connected to means for passing a predetermined heating current and with means for measuring the temperature of the wall, characterized in that it comprises means (32) for comparing the measured temperature and a reference temperature and means (42) for establishing and cutting the heating current alternatively.

8. Device according to claim 7, characterized in that said wall is concave for trapping gas or vapor bubbles.

FIG.1.

FIG.2.

FIG.3.